# EUROPEAN PATENT APPLICATION

(11) **EP 2 636 452 A1**
(43) Date of publication of application: **11.09.2013**
(21) Application number: 12158260.5
(22) Date of filing: 06.03.2012
(51) Int. Cl.: B01L 3/00

(54) **Spotting plate and process for its production**

(71) Applicant: Greiner Bio-One GmbH, 72636 Frickenhausen (DE); Scienion AG, 44227 Dortmund (DE)
(72) Inventor: Knebel, Günther, 72622 Nürtingen (DE); Eickhoff, Holger, 28857 Syke (DE)
(74) Representative: Schrell, Andreas

(57) **Abstract**

The present invention relates to a process for the production of a reaction chamber assembly, wherein a flat substrate (10) and bottomless reaction chambers (20) are provided, the substrate (10) is first loaded with a biological agent and then the bottomless reaction chambers (20) are bonded glue-free to the substrate (10), in particular through laser bonding, and liquid-tight reaction chambers, for instance individual wells, individually connected wells, such as strips, or wells in the form of a microtiter plate, are obtained. The present invention further provides a kit comprising a substrate (10) suitable for being loaded with at least one biological agent and at least one bottomless reaction chamber (20), wherein the kit is suitable for glue-free bonding of the bottomless reaction chamber (20) to the substrate (10).

## Description

The present invention relates to a process for the production of a reaction chamber assembly, wherein a flat substrate and bottomless reaction chambers are provided, the substrate is first loaded with a biological agent and then the bottomless reaction chambers are bonded glue-free to the substrate, in particular through laser bonding, and liquid-tight reaction chambers, for instance individual wells, individually connected wells, such as strips, or wells in the form of a microtiter plate, are obtained. The present invention further provides a kit comprising a substrate suitable for being loaded with at least one biological agent and at least one bottomless reaction chamber, wherein the kit is suitable for glue-free bonding of the bottomless reaction chamber to the substrate.

Multiwell or microtiter plates cover a broad spectrum of biological, chemical and pharmacological laboratory uses. For high throughput screening as well as diagnostic methods such plates are mostly produced in one piece by injection moulding. Especially as a result of high throughput applications auxiliary automatic and robotic instrumentation has been developed and the dimensions of the plates were standardised. Some analytical or diagnostic applications of multiwell or microtiter plates involve attachment or immobilisation of biological agents or probes to a surface within the wells, mostly the bottom surface, and the performance of one or more reactions in the wells followed by some sort of quantitative and/or qualitative analytical process. For example, the biological agents or probes, such as DNA or proteins, are immobilised on the bottom surface of each well in form of a microarray, i. e. as multiple spots each containing the same or different probes. The putative target(s) to be analysed are mostly fluorescently-, colorimetrically-, or chemiluminescently-labelled and brought into contact with the microarray of probes under high-stringency conditions. Alternatively, the hybridised or bound unlabelled target is detected by a labelled secondary agent. Afterwards, hybridisation of targets is determined via an appropriate detection method. Thus, if different probes are used for each spot a multitude of reactions can be performed in only one well.

For the handling of these applications robotic instruments have been developed to process the microarray plates fully automated. Although the standard structure of the plates has facilitated such automated processing, at the same time this structure presents challenges with regard to certain procedures. For example, the deposition of biological agents by printing them as microarray spots onto the bottom surface of a well is done by robotic liquid-handling systems, so-called arrayers. Said deposition requires the pipetting head or printing pin of the arrayer to move significantly up and down (z-axis) as it spots one well of a microtiter plate after the other with small drops of liquid comprising only about 0.1 to 4 nl. Depending on the kind of microarray printed it might be necessary to move the pipetting head over 100 times into one well which makes this process very time consuming. Furthermore, these movements increase the risk of damaging the pipetting head.

As a solution for this the prior art provides processes in which a separate substrate is provided onto which the microarrays can be printed without having to move the pipetting head into wells. After having been loaded, the substrate is combined with a bottomless microtiter plate using various adhesives, gaskets or fastening pins and the like (see e. g. US 2008/0287307, US 2005/0277145 and US 2003/0026739). However, these techniques bear the disadvantage of leakiness of single wells and thus the risk of cross contamination. Further, the used adhesives or gasket materials can interfere massively with assay reagents or contain toxic solvents which are not compatible with sensitive biological applications.

Further, some applications do not require a whole microtiter plate with for example 96 wells spotted with the same microarray, but instead would rather use a plate with many different microarrays. However, it is very laborious and uneconomical to spot one plate with many different microarrays. It would thus be advantageous to have single wells or reaction chambers with different microarrays that can be assembled in a separate frame according to the requirements of the specific application.

The technical problem underlying the present invention is thus to provide a process for the production of a reaction chamber assembly comprising at least one reaction chamber or well which overcomes the aforementioned disadvantages and a reaction chamber assembly obtained thereby.

This technical problem is solved by the teaching of the independent claims. In particular, the present invention provides a process for the production of a reaction chamber assembly, preferably comprising at least one reaction chamber, which process comprises, in particular consists of, the following steps in the following order: step a) providing a polymeric flat substrate having a reaction surface and a bottom surface and at least one polymeric bottomless reaction chamber, subsequently step b) loading at least one biological agent onto the reaction surface of the substrate, subsequently step c) glue-free bonding of the at least one bottomless reaction chamber to the reaction surface of the substrate and subsequently step d) obtaining a reaction chamber assembly comprising at least one liquid-tight reaction chamber.

In a preferred embodiment of the present invention the loading of the at least one biological agent is done by spotting or printing.

In the context of the present invention the term "glue-free bonding" refers to the provision of a liquid-tight bond between the lower end of the sidewalls of the reaction chamber and the reaction surface of the substrate in order to form a liquid-tight reaction chamber, wherein the reaction surface of the substrate forms the bottom. The term "bonding" is hereinafter also termed "welding". The term "glue-free" is preferably understood to mean "without adhesives" or "without gaskets" or "without solvents". Preferably, the term "glue-free" means "without adhesives" and "without gaskets" and "without solvents". In particular, the present glue-free bonding process does not use any gaskets or the like for bonding of the substrate and the bottomless reaction chamber. Also, glue-free bonding according to the present invention does not involve the use of mechanical connecting elements such as fastening pins, clamps or the like.

In a preferred embodiment, the glue-free bonding of the at least one bottomless reaction chamber to the reaction surface of the substrate is laser bonding, thermal bonding or ultrasonic bonding. Thus, thermal bonding might be used according to the present invention. In case of thermal bonding, the loaded biological agent(s) have to be compatible with the process temperature applied during the bonding. Preferably, thermal bonding occurs through the simultaneous application of heat and pressure. The heated tool will be kept at a temperature sufficient to make the polymeric materials melt while fixtures hold the reaction chamber and the substrate in place at the applied pressure. Once the process is finished, the joint or bonded components will be released as one assembled device. The process is not restricted to polymeric materials of the same chemical group as long as at least one of them is thermoplastic or has at least a functional thermoplastic layer from a set of polymers as listed below. As thermoplastic materials are covering a wide range of softening temperatures (glass transition point) the applied temperature is highly depending on the material to be bonded. Preferably, polystyrene and cyclic olefin polymers and cyclic olefin copolymers are bonded.

Ultrasonic welding, which is also preferred according to the present invention, is based on acoustic vibrations generating heat due to friction between the materials to be bonded. Sound waves are transmitted to an acoustic horn and applied to the parts, i. e. the bottomless reaction chamber and the substrate, sandwiched between fixtures. The absorption of vibration energy across the joint parts preferably causes local melting of the thermoplastics, but the heating is advantageously not that high to melt the entire base materials. Ultrasonic welding can be used for almost all polymeric materials, e. g. hard and soft plastics or amorphous or semi-crystalline plastics, and is faster than any other bonding technology. Preferably, the entire bonding process is carried out in a fraction of a second. In the process, the ultrasound is advantageously guided to the welding line of the two parts. Preferably, under the applied holding pressure of up to 5 kN the two parts will be bonded.

In a particularly preferred embodiment, the glue-free bonding of the at least one bottomless reaction chamber to the reaction surface of the substrate is laser bonding.

Laser bonding of thermoplastic materials is preferably accomplished by penetration of the laser beam through a light-transmissive upper material into a light absorbent lower material while applying external pressure. When the focal point is properly aligned to the interface, the lower layer will absorb all light. The joint line, i. e. where the sidewalls of the bottomless reaction chamber and the reaction surface of the substrate come into contact, will transport adequate heat to the upper layer of the materials to melt both polymeric materials simultaneously to achieve a permanent bonding under adequate pressure. Mostly, the laser welding process is a quasi-simultaneous process, where the laser beam is guided along the welding line for several times at high speed. Softening of the welding zone is based on the induced energy, as a result of the applied power and time. Lasers can be operated either in a continuous or intermittent mode and run at a constant or modulated speed between 1 to 100 mm/s along the welding line in the present process.

Advantageously, with the present process using the above mentioned bonding techniques, reaction chamber assemblies can be provided that are bonded without the use of adhesives and/or without gaskets and thus provide an improved liquid tightness and do not contain any toxic substances or evaporate them. The bonding processes according to the present invention, in particular laser, thermal or ultrasonic bonding, advantageously do not influence loaded biological agents or functional coatings negatively. In particular, the present process obviates the need for unnecessary vertical movement of a pipetting or arraying head typically needed when loading the bottom of a plate. The present process enables more convenient and much faster production and thus a significant reduction of production costs. Furthermore, the present process is advantageously scalable, wherein as the smallest unit single bottomless reaction chambers can be bonded with a polymeric substrate loaded with one microarray, but also several combined bottomless reaction chambers, e. g. in form of a strip, or whole bottomless microtiter plates can be used accordingly.

In the context of the present invention, a flat polymeric substrate is meant to be an even substrate, in particular a planar substrate made from a polymeric material, preferably without any irregularities, such as depressions or elevations. Preferably, the substrate is as flat as possible to allow for surface-localised reactions to be in one focal plain for proper measurement by imaging or scanning, for example by microscopy, in particular scanning confocal microscopy or a laser-scanning device.

In the context of the present invention, a bottomless reaction chamber is a container formed by sidewalls and having open top and bottom ends. Such a container may be in the form of for instance a hollow cylinder or a tube with for instance a circular, square or rectangular cross-section of its inner, outer or both circumference(s) in a plane perpendicular to the longitudinal axis of the reaction chamber. The bottomless reaction chamber, in particular the container may in one embodiment be of conical shape.

Thus, in the context of the present invention the term "reaction chamber" is understood to refer to a bottomless reaction chamber to which a bottom has been bonded, in particular refers to a bottomless reaction chamber bonded to a reaction surface of a substrate, thereby forming a liquid-tight reaction chamber having only one opening at its top end. The term "reaction chamber" is hereinafter also termed "well".

In the context of the present invention the term "loading of a biological agent" is hereinafter also termed spotting or printing of the biological agent, for example by pin-deposition or ink jet-printing using an automatic or robotic liquid-handling system, in particular so-called arrayers. Loading of the biological agent preferably leads to a stable attachment of the biological agent to the reaction surface of the substrate. Stable attachment preferably means that the loaded biological agent(s) maintain their position on the substrate under conditions of use, which can be achieved by ionic, non-covalent or covalent binding of the biological agent(s) to the substrate.

Preferably, the loading of the at least one biological agent onto the reaction surface provides a geometrical pattern of spots, preferably in form of a microarray, preferably corresponding to the inner dimensions of the reaction chamber, i. e. the area confined by the inner lateral walls of the reaction chamber. Loading results in at least one spot, which in one preferred embodiment might cover the whole area confined by the inner lateral walls of the reaction chamber or be of any appropriate smaller size. Preferably, an array of individual spots, i. e. comprising at least two or more spots, is loaded on the reaction surface of the substrate. After bonding of the substrate to the bottomless reaction chamber the loaded biological agent(s) are located at the bottom of the at least one reaction chamber. That means the reaction surface of the substrate subjected to the loading step forms the inner bottom of the liquid-tight reaction chamber after bonding.

Preferably, the spots are arranged in formats that match the SBS (Society for Biomolecular Screening; ANSI-SBS standards 1-2004 to 4-2004) standard pattern of wells or any other desired pattern.

In the context of the present invention the inner dimensions of a reaction chamber are meant to refer to the geometrical shape provided by the inner circumference of the sidewalls of the reaction chamber seen in a cross sectional view perpendicular to the longitudinal axis of the reaction chamber.

In the context of the present invention an "array", hereinafter also termed "microarray", is a collection of circular microscopic spots, in particular spots of biological agents.

Thus, it is preferably provided by the present invention that in step b) of the process according to the present invention the at least one biological agent is loaded onto the reaction surface of the substrate providing a geometrical pattern of spots which pattern corresponds in its geometrical form to the inner dimensions of the bottomless reaction chamber. That means that preferably the area loaded with the at least one biological agent does not take up more space than the inner dimensions of the bottomless reaction chamber. Preferably, a small margin is left unloaded to provide for placing inaccuracies of the bottomless reaction chamber before bonding. Since the at least one biological agent is loaded onto the reaction surface before bonding of the reaction chambers, a larger area of the reaction surface of the substrate can be covered by the microarray of biological agent(s) than in cases where the biological agents are loaded onto the reaction surface of an already assembled reaction chamber. This is because the loading device, i. e. the pipetting head, cannot be moved too close to the walls of the wells to avoid damage.

In a particularly preferred embodiment, the at least one biological agent is loaded in step b) of the present process onto the reaction surface of the substrate with or without contact between the pipetting head and the reaction surface of the substrate. In particular, this involves for example ink jet-printing as a contactless process and pinor stylus-spotting as a process involving contact of the pipetting head with the substrate.

According to the present invention, the at least one biological agent loaded onto the reaction surface of the substrate is preferably a DNA molecule, RNA molecule, PNA molecule, LNA molecule, aptamer, in particular spiegelmer, lipid, carbohydrate, protein, peptide, antibody, a cell, a cell lysate, a cell fragment, a virus or a tissue sample, wherein each of these biological agents hereinafter are also termed "types" of a biological agent.

In a preferred embodiment, at least one type of these biological agents, or mixtures thereof, in particular one single or several different members of one type of a biological agent, is/are loaded onto the reaction surface of the substrate, preferably in order to create a microarray.

A "member" of a type of a biological agent is a specific embodiment of one type of a biological agent, the type of a biological agent thus not referring to a specific individual element, but a class thereof. Thus, in the context of the present invention biological agents are of one type if they are all e. g. DNA molecules but for instance with a different DNA sequence or are all antibodies but recognising different targets.

Preferably, the at least one type of a biological agent is loaded in the form of one spot or more than one spot, preferably in form of a microarray, and may be one type or more types of a biological agent. In case it is one type of a biological agent the array may comprise one single or more than one, i. e. different, members of one type, of a biological agent. In case more than one type of a biological agent is loaded, each type of a biological agent may be one single or may comprise more than one member of said type of a biological agent.

Preferably, biological agents of the same or different type, i. e. two or more, are arranged within the same or distinct spots of each microarray. Preferably, more than one distinct spot in one microarray comprises the same type of biological agent, in particular the same member thereof, for instance as controls, preferably in combination with spots comprising other members of the same type or of different types of biological agents.

In a preferred embodiment, the biological agents are of the same or of a different type.

According to the present invention, the concentration of the at least one biological agent within one spot on the reaction surface of the substrate is selected to provide for adequate sensitivity of binding events with a target sample, wherein preferably the concentration ranges from 1 to 100 ng/mm², preferably from 5 to 50 ng/mm² and more preferably from 10 to 30 ng/mm². This concentration is preferably provided in a volume of spotting solution used per spot of from 0,001 nl to 1 µl, preferably 0,01 nl to 0,5 µl, more preferably 0,1 nl to 0,1 µl, in particular 0,3 nl to 0,01 µl, in particular 0,1 nl to 5 nl.

The number of distinct spots in a microarray is preferably at least 10, in particular at least 20 distinct spots, preferably at least 50 distinct spots, and most preferred at least 80, in particular 100 distinct spots, but usually does not exceed about 500 distinct spots. Preferably, the spots have a diameter from 50 µm to 500 µm, preferably from 100 µm to 400 µm, more preferably from 100 and 300 µm, and preferably are as circular as possible, which makes the subsequent read out easier. Preferably, each spot of the microarray is loaded, preferably printed, once or multiple times, for example one spot might be loaded, e. g. printed, up to four times, that means that a liquid droplet is deposited up to four times on the same spot to form one spot of the microarray.

However, according to the present invention it is also possible to load the at least one biological agent onto the reaction surface as one spot covering the whole reaction surface, i. e. the bottom of the reaction chamber. Thus, preferably corresponding to the inner dimensions of the reaction chamber one single spot covers the whole reaction surface of the liquid-tight reaction chamber with the at least one biological agent.

In a preferred embodiment of the present invention, the flat polymeric substrate has a thickness of from 10 to 2000 µm, preferably 50 to 2000 µm, preferably 100 to 2000 µm, preferably 100 to 1000 µm, in particular 100 to 500 µm, most preferred 190 µm. Further particularly preferred, the flat polymeric substrate has a thickness of 1000 µm. Preferably, the substrate is transparent or translucent to allow for optical measurements and preferably possesses a low autofluorescence. In another preferred embodiment, the substrate is pigmented, i. e. is not translucent, e. g. is opaque, white or black.

The process according to the present invention preferably provides that the substrate and the bottomless reaction chamber are made from the same or different materials. Preferably, the substrate is made from an amorphous thermoplastic material. Preferably, the substrate and the bottomless reaction chamber are made from the same material.

Preferably, these materials are selected from the group consisting of polystyrene (PS), polypropylene (PP), polycarbonate (PC), polyamide (PA), acrylic butadiene styrene (ABS), polymethyl methacrylate (PMMA), styrene acrylonitrile (SAN), cyclic olefin polymers (COP), and cyclic olefin copolymers (COC). Particularly preferred these materials are selected from the group consisting of polystyrene, COP and COC, in particular COP and COC, preferably for the bottomless reaction chamber and/or the substrate. According to the present invention the substrate is not made from glass.

Preferably, the substrate can be pretreated with any suitable process to provide for better processing, for example cleaning processes such as plasma etching or a treatment with ionising radiation to enhance binding capacity.

Preferably, the substrate is transparent or translucent, whereas it is preferred that the material for the bottomless reaction chamber is pigmented, i. e. not translucent, for example opaque, white, or black, wherein black is preferred. It is, however, also possible according to the present invention that both, the substrate and the bottomless reaction chamber, are made from transparent material or pigmented material.

According to the present invention it is particularly preferred that at least one functional coating is applied onto at least the reaction surface of the substrate prior to step a) or subsequently to step a) and prior to step b) of the present process. Such a functional coating enables easier and more specific binding of the at least one biological agent on the reaction surface. Thus, the functional coating increases the binding capacity of the polymeric substrate. The binding of the biological agent can preferably be a covalent or an ionic binding. Preferably, such a functional coating is a two dimensional (2D) or three dimensional (3D) functional coating comprising aldehyde, amino, in particular primary or secondary amino, unsaturated carbon, or epoxy groups or mixtures thereof. In a further preferred embodiment said functional coating comprises amines, carboxylic acids, aldehydes, coupled streptavidin, ketones or mixtures thereof as functional groups. To minimise unspecific binding of the biological agent, the functional coating can further comprise quaternary ammonium ions or polyethylene glycol units with a hydrophilic-lipophilic-balance of 5 to 8.

Thus, the functional coating provides the reaction surface of the polymeric substrate with these functional groups and thus with a high binding capacity, which in turn allows for specific binding of the biological agent(s). Preferably, the functional coating further comprises functional units or groups for the minimisation of unspecific binding of a biological agent. In a preferred embodiment, the functional coating is a 2D, i. e. a two dimensional functional (2D) coating. The functional coating can also preferably be gel-like, in particular hydrogel-like, to generate a three dimensional (3D) or swellable functional coating, which is particularly preferred for amino functionalisation. 3D functional coatings are particularly advantageous in so far as they reduce the evaporation and thus increase the incubation or reaction time of the biological agent.

Preferably, the functional coating advantageously allows for covalent binding of the at least one biological agent spotted onto such a functionally coated substrate.

Preferably, the functional coating is applied onto the reaction surface of the substrate by submerging, spraying or low pressure plasma polymerisation. This preferably comprises wet-chemical and photochemical processes employing alcoholic or aqueous media. Particularly preferred is a low pressure plasma polymerisation process called "plasma-enhanced chemical vapour deposition" (PE-CVD). This process is particularly advantageous in so far as it provides for surface functionalisation in vacuum which allows for high operational safety and environmental friendliness since all generated reaction products can be safely evacuated. Furthermore, process temperatures ranging from 20 to 80 °C, preferably from 25 to 70 °C, most preferred from 25 to 50 °C are especially compatible with polymeric materials such as used by the present invention since their basic characteristics and, most importantly, their form is not changed due to the treatment. With this preferred functionalisation process the contact angle can advantageously be decreased which improves the wettability significantly.

Preferably, the substrate can be coated with nitrocellulose. This is particularly preferred for applications involving protein microarrays. Conversely, the functional coating can comprise a so-called protein resist coating which prevents proteins from binding. This is advantageous and preferred for applications in which the presence of proteins is not desirable.

In a particularly preferred embodiment, it is provided that in step a) of the present process at least two bottomless reaction chambers are provided which form a superstructure of reaction chambers. Thus, it is preferred in this embodiment that at least two bottomless reaction chambers are connected to form a superstructure. Preferably, the at least two bottomless reaction chambers are integral parts formed in one piece and thereby form a superstructure.

In one particularly preferred embodiment, the superstructure comprises bottomless reaction chambers which are permanently fixed to each other, i. e. the two or more bottomless reaction chambers are for example moulded as one piece.

In another preferred embodiment the superstructure of bottomless reaction chambers can, however, also be manufactured in such a way, for instance by providing fracture lines or breaking points, that the reaction chambers can be separated from each other at any convenient time during handling, in particular also after having been provided with the substrate forming the bottom of the reaction chamber. In the following, such superstructures are also termed "separable superstructures".

Preferably, the at least two bottomless reaction chambers are connected to form a superstructure in form of a strip of preferably four, six, eight, or 12 bottomless reaction chambers to form a superstructure, in particular a separable superstructure.

Preferably, the substrate has a size appropriate to accommodate the superstructure of bottomless reaction chambers and thus form bottoms of the superstructure of liquid-tight reaction chambers in one bonding step. Preferably, the at least one biological agent is spotted in a geometrical pattern of spots corresponding to the bottom openings of each of the bottomless reaction chambers, i. e. their inner dimensions, of the superstructure so that each spotted microarray is located at the bottom surface of the liquid-tight reaction chambers after bonding. Thus, in step c) of the present process, i. e. during bonding, it is preferred that the substrate also connects the superstructure of bottomless reaction chambers or two or more single bottomless reaction chambers. That means all reaction chambers contained in the superstructure or several single reaction chambers are bonded to one substrate. However, it is also possible that solely the bottom of each reaction chamber is left after bonding and the substrate material between the reaction chambers is removed. It is further possible to provide a substrate that comprises predetermined fracture lines or breaking points allowing the reaction chambers after having been bonded to the substrate to be separated, if required.

According to the present invention it is particularly preferred that the reaction chamber assembly comprises a frame supporting the at least one bottomless reaction chamber or the superstructure of reaction chambers, in particular the separable superstructure. Thus, in a preferred embodiment, e. g. if the present process is used to produce single liquid-tight reaction chambers, a frame can be provided featuring a grid into which the single reaction chambers can be assorted. For example, the bottomless reaction chambers might have the ANSI/SBS standard dimensions of the wells of a 96-well microtiter plate.

In a preferred embodiment, to provide adequate support the frame has the standard dimensions of a 96-well plate. In a further preferred embodiment, the frame comprises a grid, preferably a grid fitting in a frame with ANSI/SBS standard dimensions, preferably such a grid is suitable to support a) 96 bottomless reaction chambers or b) 96 liquid-tight reaction chambers obtained after bonding or c) superstructures comprising 96 reaction chambers, or d) for example twelve superstructures comprising eight reaction chambers each, preferably in the form of strips. Of course, the grid can preferably also correspond to the position of the wells of six, twelve, 24, 48, 96, 384 or 1536 well plates and provide support for the corresponding number of reaction chambers.

Alternatively, the frame might be used without a grid to support superstructures, in particular separable superstructures, of reaction chambers. Preferably, the superstructures are in the form of strips of consecutive reaction chambers. Furthermore preferred, the frame without grid comprises recesses in the form of the outer geometry of the reaction chambers on two opposing upper inward facing sides suitable to mate with the outer two reaction chambers of a superstructure in form of a strip. Such a frame can have any appropriate dimensions, but it is particularly preferred that the frame is a frame of a microtiter plate and has an outer dimension according to international standard ANSI/SBS.

Preferably, if superstructures of liquid-tight reaction chambers are used together with a frame with or without a grid, the frame and the superstructure comprise alignment or orientation means on one side in order for the superstructure to be insertable into the frame in only one orientation.

Preferably, the "footprint" for most multiwell plates is approximately 85 mm x 128 mm with wells located in a standardised format depending upon the total number of wells. The American National Standards Institute (ANSI) has published the SBS Standards for microplates as: "Footprint Dimensions" (ANSI/SBS 1-2004), "Height Dimensions" (ANSI/SBS 2-2004), "Bottom Outside Flange Dimensions" (ANSI/SBS 3-2004) and "Well Positions" (ANSI/SBS 4-2004). All of these ANSI/SBS publications are incorporated herein by reference, and are hereinafter referred to as "standard" or "SBS standard" (established by Society for Biomolecular Screening).

Providing the reaction chamber assembly according to the present invention in such standardised dimensions is advantageous, since automated handling devices have been developed accordingly.

In a particularly preferred embodiment the superstructure of reaction chambers is an integral part of the frame of the reaction chamber assembly, i. e. a whole bottomless microtiter plate is used.

Preferably, the bottomless microtiter plate used comprises at least 96, in particular 96, bottomless reaction chambers or wells. However, also bottomless microtiter plates with more or less reaction chambers might be used, for example comprising six, twelve, 24, 48, 96, 384 or 1536 bottomless reaction chambers. Preferably, the microtiter plates have 96, 384 or 1536 reaction chambers. Accordingly, it is preferred that the at least one biological agent is loaded, in particular spotted, onto the substrate in a pattern corresponding to the bottom openings of the bottomless reaction chambers, according to the number of reaction chambers of the bottomless microtiter plate used. This can advantageously be done according to SBS standard ANSI/SBS 4-2004 since the placing for the reaction chambers within the microtiter plates is also standardised for each of the plates mentioned above. Thus, the at least one biological agent or the microarray of loaded, in particular spotted, biological agent(s) is located at the bottom surface of the liquid-tight reaction chambers after bonding of the spotted substrate and the bottomless microtiter plate. This preferably provides that the substrate has an appropriate size to cover the footprint of the microtiter plate.

The bottomless reaction chambers according to the present invention, particularly their inner circumference, their outer circumference or both can have any suitable geometric form, including having a rectangular, square or circular shaped cross section seen in a plane perpendicular to the longitudinal extension of the reaction chamber, particularly preferred are square shaped reaction chambers.

The present invention also relates to a reaction chamber assembly obtainable, preferably obtained, according to the process according to the present invention.

Thus, the present invention also provides a particular advantageous reaction chamber assembly, preferably comprising a polymeric flat substrate being glue-free bonded to at least one bottomless reaction chamber forming at least one liquid-tight reaction chamber on a flat substrate and wherein on said flat substrate which forms the bottom of the reaction chamber at least one biological agent has been loaded onto before the glue-free bonding process step took place, so that at least one liquid-tight reaction chamber is obtained which is in particular characterised by its unique and advantageous structural distinctions, namely those resulting from the glue-free bonding of the flat substrate already containing the loaded at least one biological agent to the bottom end of the sidewalls of the reaction chamber.

The present invention further relates to a kit comprising x) a polymeric flat substrate having a reaction surface and a bottom surface and being suitable for being loaded with at least one biological agent wherein at least the reaction surface optionally comprises a functional coating and y) at least one polymeric bottomless reaction chamber, wherein the kit is suitable and designed for glue-free bonding of the polymeric bottomless reaction chamber to the polymeric flat substrate.

The present invention further relates to a method for analysing or screening samples, wherein a kit or reaction chamber assembly according to the present invention is used.

Further preferred embodiments of the present invention are the subject matter of the subclaims.

The present invention will be further described in the accompanying non-limiting figures and examples.

The figures show:
Figure 1 is a perspective view of a bottomless reaction chamber and a polymeric flat substrate.
Figure 2 shows a perspective view of a superstructure of 8 bottomless reaction chambers with the polymeric flat substrate.
Figure 3 is a perspective view of the superstructure of 8 bottomless reaction chambers with the substrate and a frame without grid.
Figure 4 represents a perspective view of a superstructure of 8 separable bottomless reaction chambers and the polymeric flat substrate.
Figure 5 shows a perspective view of the superstructure of 8 separable bottomless reaction chambers and the polymeric flat substrate with a frame comprising a grid into which either the superstructure as a whole or separated reaction chambers can be inserted.
Figure 6 shows a perspective view of a superstructure of 96 bottomless reaction chambers and the polymeric flat substrate which is separable into strips of superstructures comprising 8 reaction chambers and insertable into a frame without grid as a whole or as separated superstructures.
Figure 7 shows a perspective view of bottomless reaction chambers as an integral part of a microtiter plate frame and the polymeric flat substrate.

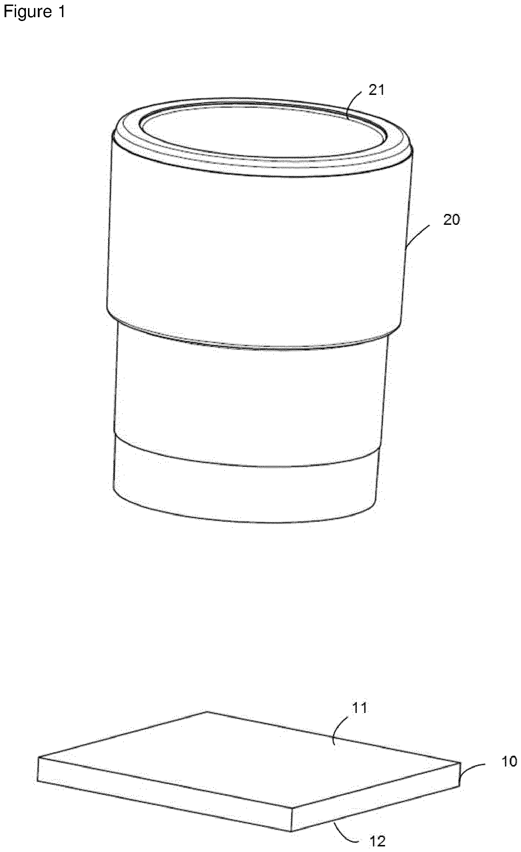

Figure 1 shows the smallest entity of the reaction chamber assembly according to the present invention which consists of one bottomless reaction chamber 20 in the form of a hollow cylinder. Said bottomless reaction chamber 20 is bonded glue-free during the process according to the present invention onto polymeric flat substrate 10 having bottom surface 12 and reaction surface 11. After bonding the reaction surface 11 of the polymeric flat substrate 10 forms the bottom of a liquid-tight reaction chamber, wherein the bottom of the liquid-tight reaction chamber is confined by inner lateral wall 21 of reaction chamber 20.

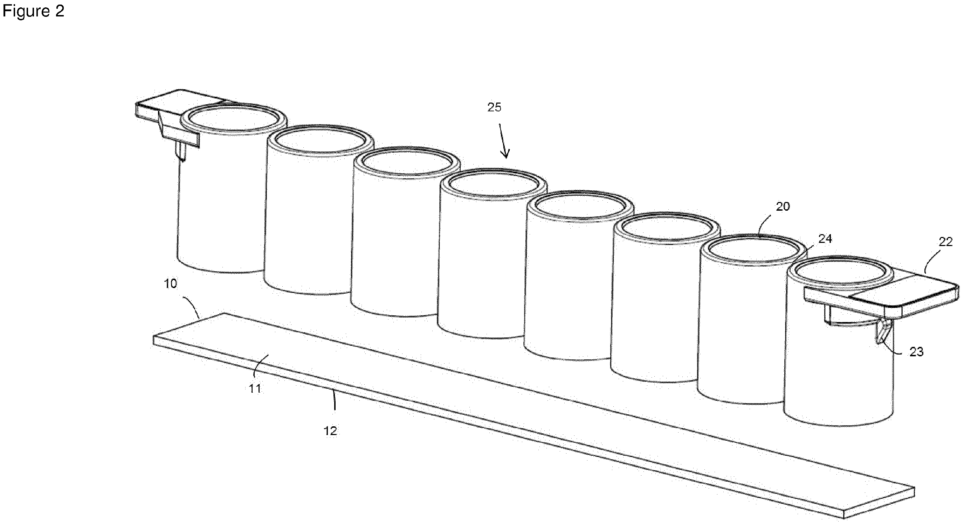

Figure 2 shows a superstructure 25 of eight consecutive bottomless reaction chambers 20 in the form of a strip, which is formed as one piece, wherein bottomless reaction chambers 20 are connected via integral connection 24. Polymeric flat substrate 10 has an appropriate size in order for the complete superstructure to be bonded glue-free to it, wherein each bottomless reaction chamber of superstructure 25 receives a bottom so that after bonding a superstructure of eight liquid-tight reaction chambers is formed. Further, superstructure of bottomless reaction chambers 25 comprises gripping element 22 which is attached to the outer two bottomless reaction chambers facing away from the centre of the strip. Gripping element 22 is formed perpendicular to the outer wall of the outer reaction chambers, wherein the upper surface of gripping element 22 essentially is in one plane with the upper end of the reaction chamber. Further, below gripping element 22 and spaced apart from it the superstructure of bottomless reaction chambers 25 comprises latch 23 for a snap-on connection of the superstructure 25 to e. g. a frame of a microtiter plate. Preferably, gripping element 22 and latch 23 are formed in one piece with superstructure 25, wherein latch 23 preferably is deformable.

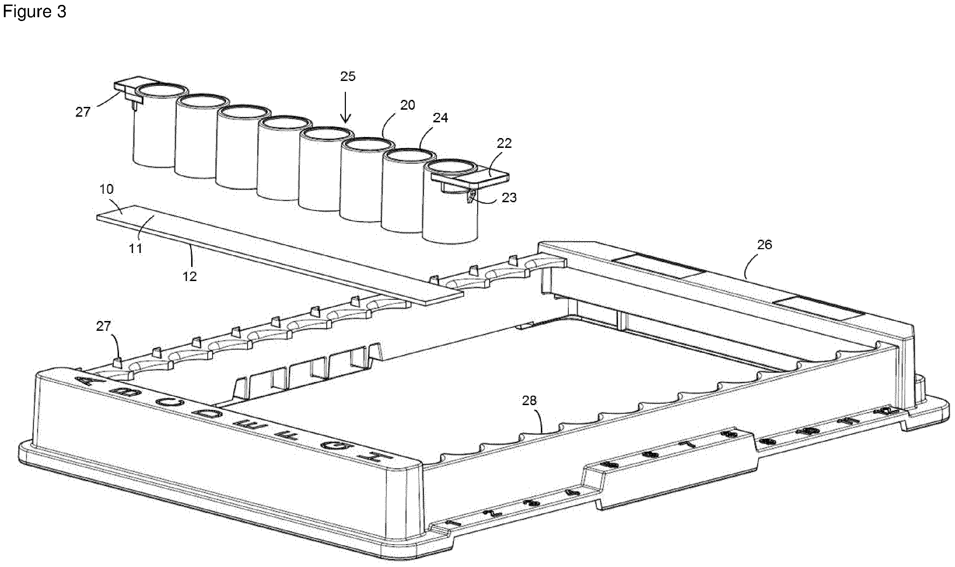

Turning now to figure 3 which depicts the superstructure 25 of figure 2 and a frame 26 without grid, which is the frame of a microtiter plate according to ANSI/SBS standards. The frame without grid 26 comprises recesses 28 which correspond to the form of the outer wall of the reaction chambers 20 of superstructure 25. Further, the frame comprises on one side alignment means 27 which mates with alignment means 27 of gripping element 22 of superstructure 25 in order to provide only one possible orientation in which superstructure 25 can be inserted into frame 26. When superstructure 25 is inserted into frame 26 gripping element 22 rests at least in part on the surface of the sidewalls of frame 26.

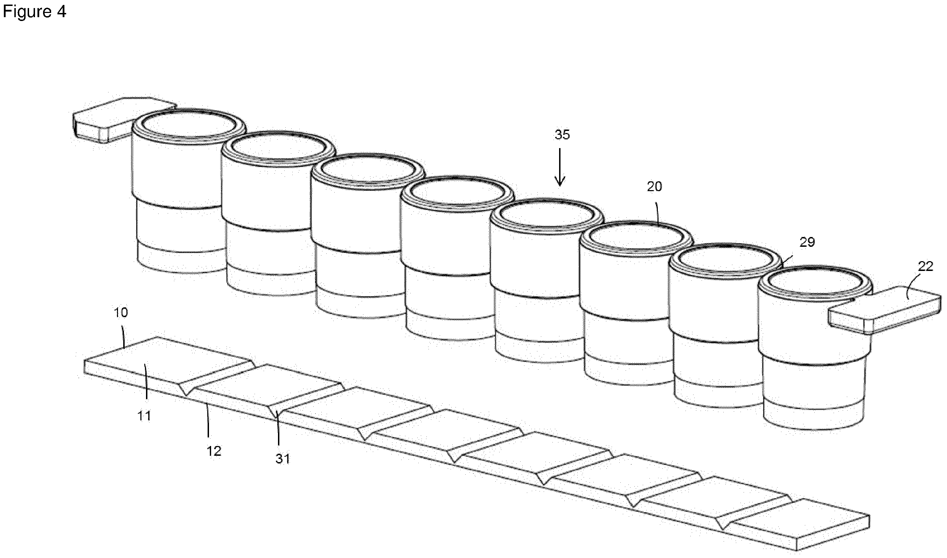

Figure 4 shows a separable superstructure 35 of eight consecutive bottomless reaction chambers 20 in the form of a strip in which the reaction chambers are linked to each other via separable connecting elements 29 which do not extend over the full height of the side wall of each reaction chamber, but only over a part of it, namely over a short distance at its upper end, so as to define and preform breaking lines. The connecting elements 29 thus represent breaking lines between the different reaction chambers 20 allowing their separation. The polymeric substrate 10 is equipped with V-shaped grooves 31 defining and preforming breaking lines, which divide the substrate 10 into separable parts of the surface 11, each part is suitable for being aligned with a bottomless reaction chamber 20 of the superstructure 25. The polymeric flat substrate 10 with its grooves 31 defining breaking lines is bonded to the separable superstructure 35 such that the formed liquid-tight reaction chambers can be separated from each other after bonding. The separable superstructure 35 also comprises gripping element 22, but not latch 23.

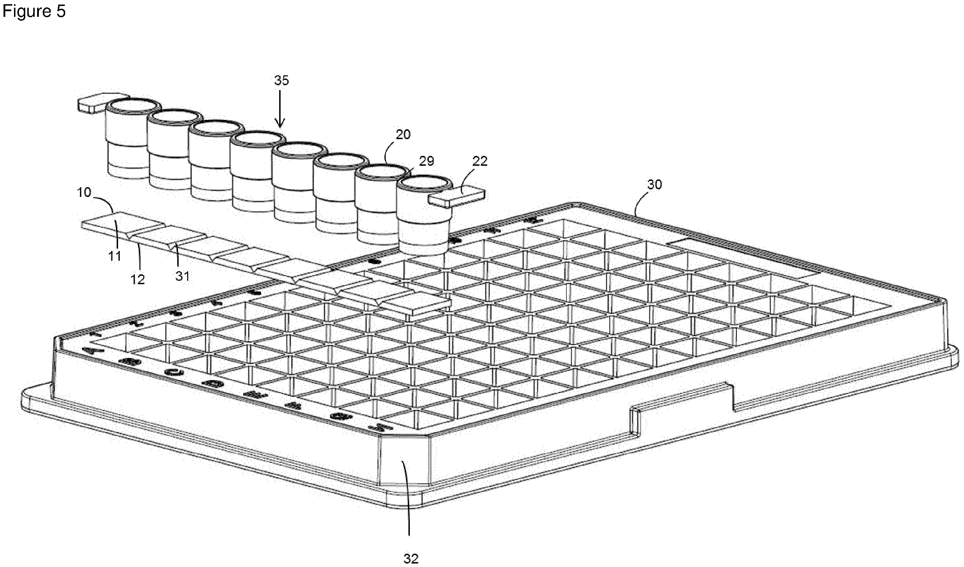

Figure 5 shows a separable superstructure 35 and a frame with grid 30 which preferably is the frame of a microtiter plate according to ANSI/SBS standards comprising a grid and notched corners 32 as orienting means on one side. The polymeric flat substrate 10 is equipped with grooves 31 defining and preforming breaking lines as explained for Figure 4 and is bonded to separable superstructure 35 in a manner allowing for single liquid-tight reaction chambers to be formed. The liquid-tight reaction chambers can be separated into individual wells or strips from the superstructure due to the preformed breaking lines. The separable superstructure 35 can be inserted into a frame without grid (not depicted) or into a frame with grid 30 in form of individually separated liquid-tight reaction chambers or as a superstructure, i. e. as strip or microplate, wherein the bottoms of individual reaction chambers 20 formed by the substrate 10 are separated from each other by breaking them off along the breaking lines formed by the grooves 31 before insertion while the connecting elements 29 remain intact.

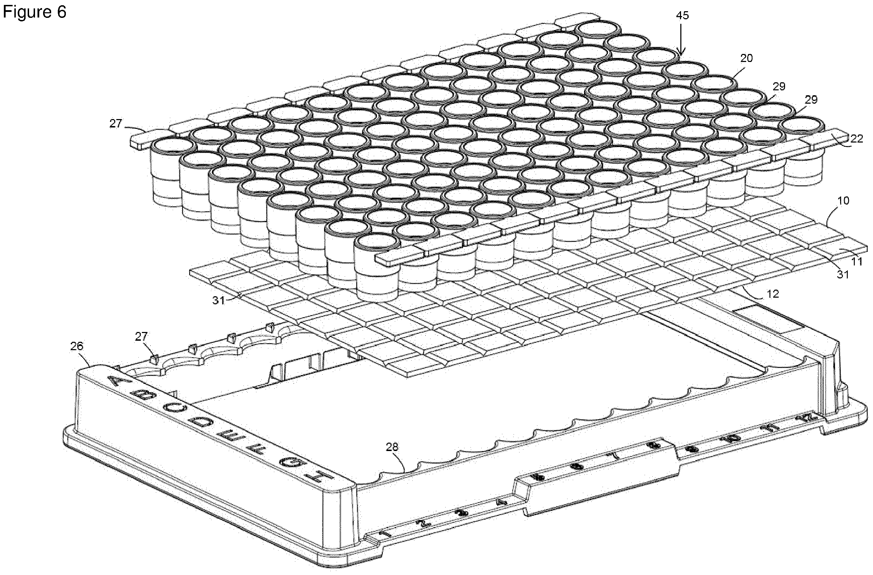

Figure 6 shows an alternative embodiment of separable superstructure 35 of figure 4, wherein the separable superstructure comprises twelve strips of superstructures forming an overall superstructure 45 having 96 bottomless reaction chambers 20. Superstructure 45 comprises separable connecting elements 29 between adjacent strips each comprising eight bottomless reaction chambers and between adjacent reaction chambers 20 of each strip. Complementary thereto, polymeric flat substrate 10 comprises grooves 31 defining predetermined breaking lines dividing the reaction surface 11 into 96 separable essentially square parts, each being suitable for being aligned with a bottomless reaction chamber 20. The grooves 31 defining breaking lines and the corresponding connecting elements 29 allow for separation of strips of liquid-tight reaction chambers and allow also for separation of single liquid-tight reaction chambers after bonding. A frame without grid 26 allows for insertion of either the whole superstructure 45 or single separated strips of liquid-tight reaction chambers. Frame 26 as well as gripping elements 22 of superstructure 45 comprise alignment means 27 to allow for only one orientation when inserting superstructure 45 into frame 26.

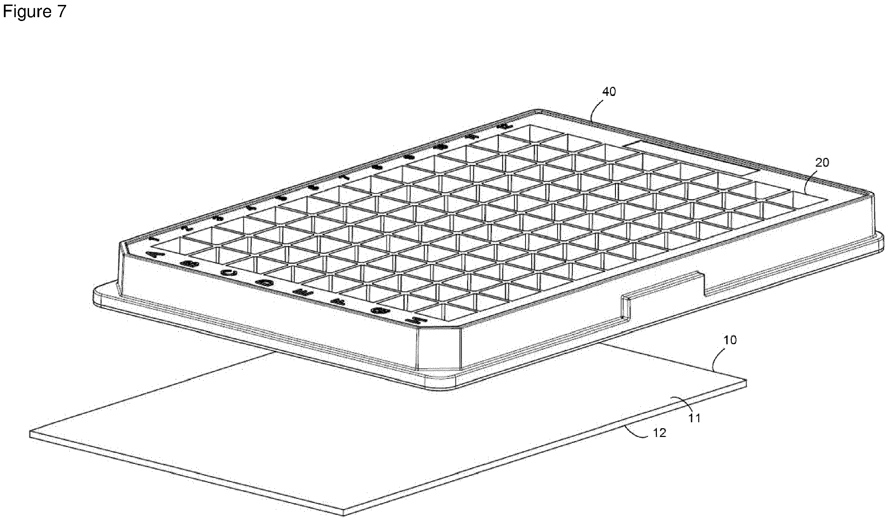

Figure 7 depicts an further preferred embodiment of the present invention, wherein the bottomless reaction chambers are an integral part of the frame of a microtiter plate 40 preferably according to ANSI/SBS standards. The polymeric flat substrate 10, which preferably also has the size of the bottom of an ANSI/SBS standard microtiter plate is bonded glue-free to frame 40 comprising the bottomless reaction chambers as an integral part.

### Example Preparation of a microtiter plate in a batch process

For the preparation of a reaction chamber assembly in form of a microtiter plate 40 a polymeric flat substrate plate 10 having a reaction surface 11 and a bottom surface 12 is used. The substrate 10 has a size according to SBS standard ANSI/SBS 4-2004 appropriate to accommodate a superstructure 40, here a microtiter plate with bottomless reaction chambers 20.

The flat substrates are first analysed for the homogenity of their surfaces with a fluorescence scanner at 532 nm. The averaged background fluorescence at 96 positions is measured and averaged. In a second quality control the contact angle with water is measured at 10 positions.

Afterwards, the biological agent to be loaded or spotted onto the substrate plates 10 are prepared in their respective buffer solutions and positioned in the "source tube" or "source plate" location of a printing system or spotter, for example a sciFLEXARRAYER. The printing system or spotter or sciFLEXARRAYER operating software typically provides the loading or printing protocols, including array layout. Prior to printing, the substrate plates 10 are positioned in suitable holders, where they get fixed for example by spring loading or by applying a vacuum. If for example the sciFLEXARRAYER systems are used for sample deposition, a CCD camera can be used for an appropriate alignment of arrays by referencing the system to specific fiducials, marks or edges on or in the substrate plates.

Before spotting, the temperature of a sample plate, the substrate plates 10 and the air humidity is defined and adjusted. The spotting of the arrays of the biological agent onto the substrate plate 10 is carried out. Afterwards, a further quality control is performed by evaluating reflection images of the printed arrays. Further, the existence of spots and its position is analysed.

After spotting, the substrate plates with the printed array remain in the sciFlexarrayer for immobilisation of the biological agent (in batch process) or, in a continuous process, are transferred into an incubator at set process conditions (humidity temperature).

After immobilization, the substrate plates 10 are either immediately washed and blocked and thereafter welded to the superstructure 40, i.e. the bottomless microtiter plate. Alternatively, the bottomless microtiter plate is first welded to the superstructure and then washed and blocked. Welding of the substrate plate 10 with the bottomless superstructure 40 is done using a glue free welding technology, namely laser bonding.

Washing and blocking are carried out either manually or with automated washing stations by using specified solutions depending upon the specific application.

Finally, the microtiter plates are transferred into aluminium coated polymer bags, after evacuation argon is filled in and the containers are sealed and labelled.

## Claims

1. A process for the production of a reaction chamber assembly, which process comprises the following process steps in the following order:
a) providing a polymeric flat substrate (10) having a reaction surface (11) and a bottom surface (12) and at least one polymeric bottomless reaction chamber (20), subsequently
b) loading at least one biological agent onto the reaction surface (11) of the substrate (10), subsequently
c) glue-free bonding of the at least one bottomless reaction chamber (20) to the reaction surface (11) of the substrate (10) and subsequently
d) obtaining a reaction chamber assembly comprising at least one liquid-tight reaction chamber.

2. The process according to claim 1, wherein the glue-free bonding is laser bonding, thermal bonding or ultrasonic-bonding.

3. The process according to claims 1 or 2, wherein the substrate has a thickness from 10 to 2000 µm.

4. The process according to any one of the preceding claims, wherein in step b) the at least one biological agent is spotted onto the reaction surface (11) of the substrate (10) providing a geometrical pattern of spots corresponding to the inner dimensions of the bottomless reaction chamber (20).

5. The process according to any one of the preceding claims, wherein in step b) the at least one biological agent is loaded onto the reaction surface (11) of the substrate (10) with or without contact between the pipetting head and the reaction surface (11) of the substrate (10).

6. The process according to any one of the preceding claims, wherein the at least one biological agent is a DNA molecule, RNA molecule, PNA molecule, LNA molecule, aptamer, in particular spiegelmer, lipid, carbohydrates, protein, peptide, antibody, a cell, a cell lysate, a cell fragment, a virus or a tissue sample.

7. The process according to any one of the preceding claims, wherein the substrate (10) and the bottomless reaction chamber (20) are made from the same or different materials selected from the group consisting of polystyrene, polypropylene, polycarbonate, polyamide, acrylic butadiene styrene, polymethyl methacrylate, styrene acrylonitrile, cyclic olefin polymers, and cyclic olefin copolymers.

8. The process according to any one of the preceding claims, wherein at least one functional coating is applied onto at least the reaction surface (11) of the substrate (10) prior to step a) or subsequently to step a) and prior to step b).

9. The process according to claim 8, wherein the functional coating is a two dimensional (2D) or a three dimensional (3D) functional coating comprising aldehyde, amino, unsaturated carbon or epoxy groups or mixtures thereof.

10. The process according to claim 8 or 9, wherein the functional coating is applied onto the reaction surface (11) of the substrate (10) by submerging, spraying or low pressure plasma polymerisation.

11. The process according to claim 10, wherein the low pressure plasma polymerisation process is plasma enhanced chemical vapour deposition (PE-CVD).

12. The process according to any one of the preceding claims, wherein in step a) at least two bottomless reaction chambers (20) are provided which form a superstructure (25), in particular a separable superstructure (35), of reaction chambers.

13. The process according to any one of the preceding claims, wherein the reaction chamber assembly comprises a frame (26), in particular a frame with grid (30), supporting the at least one bottomless reaction chamber (20), the superstructure (25), in particular the separable superstructure (35), of reaction chambers.

14. The process according to claim 13, wherein the superstructure of reaction chambers is an integral part of the frame (40) of the reaction chamber assembly.

15. The process according to claim 13 or 14, wherein the frames (26, 30, 40) are frames of microtiter plates and have an outer dimension according to International Standard ANSI 1-2004/SBS.

16. A reaction chamber assembly obtainable according to the process of any one of claims 1 to 15.

17. A kit comprising
x) a polymeric flat substrate (10) having a reaction surface (11) and a bottom surface (12) and being suitable for being loaded with at least one biological agent, wherein at least the reaction surface (11) optionally comprises a functional coating and
y) at least one polymeric bottomless reaction chamber (20), wherein the kit is suitable and designed for glue-free bonding of the polymeric bottomless reaction chamber (20) to the polymeric flat substrate (10).

18. A method for analysing or screening samples, wherein a kit or a reaction chamber assembly according to claim 16 or 17 is used.
